# EUROPEAN PATENT SPECIFICATION

(11) **EP 3 733 390 B1**
(45) Date of publication and mention of the grant of the patent: **25.10.2023**
(21) Application number: 18903832.6
(22) Date of filing: 10.12.2018
(51) Int. Cl.: B29C 33/38, B29C 35/08, B29C 43/36, B29C 43/52, B29C 70/54, H05B 6/10, H05B 6/14, B29K 105/08

(54) **COMPOSITE-MATERIAL MOLDING DEVICE, AND COMPOSITE-MATERIAL MOLDING METHOD**
VORRICHTUNG ZUM FORMEN VON VERBUNDWERKSTOFFEN UND VERFAHREN ZUM FORMEN VON VERBUNDWERKSTOFFEN
DISPOSITIF DE MOULAGE DE MATÉRIAU COMPOSITE ET PROCÉDÉ DE MOULAGE DE MATÉRIAU COMPOSITE

(30) Priority: 31.01.2018 JP 2018015618
(43) Date of publication of application: 04.11.2020
(73) Proprietor: MITSUBISHI HEAVY INDUSTRIES, LTD., Chiyoda-ku Tokyo 100-8332 (JP); Akita University, Akita-shi Akita 010-8502 (JP)
(72) Inventor: KAMIHARA, Nobuyuki, Tokyo 108-8215 (JP); YAMAGUCHI, Kengo, Tokyo 108-8215 (JP); TAKAGI, Kiyoka, Tokyo 108-8215 (JP); ABE, Toshio, Nagoya-shi, Aichi 453-0862 (JP); MURAOKA, Mikio, Akita-shi, Akita 010-8502 (JP)
(74) Representative: Henkel & Partner mbB
(86) International application number: PCT/JP2018/045303
(87) International publication number: WO 2019/150769

(56) References cited:
- EP-A1- 3 431 274
- WO-A1-2012/133406
- WO-A1-2017/183467
- WO-A1-2017/183467
- JP-A- H0 358 809
- JP-A- 2013 154 625
- US-A1- 2009 071 217
- US-A1- 2017 080 647

## Description

### Field

The present invention relates to an apparatus for forming a composite material, and a method for forming a composite material.

### Background

Among materials having lightness in weight and high strength, a composite material in which reinforcing fibers are impregnated with resin has been known. The composite material is being used for airplanes, automobiles, ships, and the like. As a method for producing the composite material, a method has been known that laminates sheets formed of a composite material in which reinforcing fibers are impregnated with resin on one another, applies a magnetic field to the laminated sheets while pressing them, and heats them (refer to Patent Literature 1).

An other method for forming a composite material is known from document WO 2017/183467 A1.

### Citation List

### Patent Literature

Patent Literature 1: Japanese Patent Application Laid-open No. 2014-116293

### Summary

### Technical Problem

The composite material has electric conductivity in the reinforcing fibers. Thus, the composite material has low electric conductivity except in a specific direction. When such a composite material is formed by the method of Patent Literature 1, there is a problem in that because of the low electric conductivity of the composite material, even when the magnetic field is applied to the entire composite material to heat it, temperature unevenness occurs in the composite material during heating. Given these circumstances, there is a problem in that the composite material obtained by reacting the resin by the method of Patent Literature 1 produces strength unevenness and thus does not achieve high quality.

The present invention has been made in view of the above, and an object thereof is to provide an apparatus for forming a composite material, and a method for forming a composite material reducing the occurrence of temperature unevenness in the composite material during heating.

### Solution to Problem

According to the present disclosure, J '2. a pressure head is provided facing a magnetic field coil via a pre-reaction composite material. The magnetic field coil is provided on one side of the composite material, and the pressure head is provided on another side of the composite material. The pressure head includes a pressure head body and a high thermal conductive material layer. The pressure head body is formed of a material transparent to a magnetic field applied by the magnetic field coil. The high thermal conductive material layer is provided on a side of the pressure head body facing the composite material, is transparent to the magnetic field applied by the magnetic field coil, and is formed of a material having a thermal conductivity higher than that of the composite material.

With this configuration, the high thermal conductive material layer can distribute, in an in-plane direction, heat that has been generated inside the composite material, and thus the occurrence of temperature unevenness in the composite material during heating can be reduced. Thus, with this configuration, the occurrence of strength unevenness in the composite material obtained by reacting resin can be reduced, and thus a composite material with high quality can be obtained.

In this configuration, it is preferable that the material forming the high thermal conductive material layer contains any one of aluminum nitride, silicon nitride, sapphire, alumina, silicon carbide, and a sheet material containing a unidirectional material in which no eddy current occurs in accordance with the magnetic field applied by the magnetic field coil. With this configuration, the high thermal conductive material layer can quickly distribute, in the in-plane direction, the heat that has been generated inside the composite material and can thus further reduce the occurrence of temperature unevenness in the composite material during heating.

In this configuration, it is preferable to further include a heat generating material layer provided between the pressure head body and the high thermal conductive material layer, generating heat in accordance with the magnetic field applied by the magnetic field coil, and formed of a material having a heat capacity smaller than that of the composite material. Alternatively, it is preferable to further include a heat generating material layer provided on a side of the high thermal conductive material layer facing the composite material, generating heat in accordance with the magnetic field applied by the magnetic field coil, and formed of a material having a heat capacity smaller than that of the composite material. With these configurations, the heat generating material layer can generate heat in accordance with the magnetic field leaking to the pressure head side, which has been applied by the magnetic field coil but has not been used for generating the heat inside the composite material, and thus the composite material can be heated efficiently.

In the configuration including the heat generating material layer, it is preferable that the heat generating material layer is a metallic thin film. With this configuration, the heat generating material layer can generate heat more efficiently, and thus the composite material can be heated more efficiently.

In the configuration including the heat generating material layer, it is preferable to further include a heat insulating material layer provided on a side on which the pressure head body is present with respect to the high thermal conductive material layer and the heat generating material layer and formed of a material having a thermal conductivity lower than that of the pressure head body. With this configuration, the heat insulating material layer can reduce transmission of heat generated in the composite material and the heat generating material layer to the pressure head body, and thus the composite material can be heated even more efficiently.

In the configuration not including the heat generating material layer, it is preferable to further include a heat insulating material layer provided between the pressure head body and the high thermal conductive material layer and formed of a material having a thermal conductivity lower than that of the pressure head body. With this configuration, the heat insulating material layer can reduce transmission of the heat generated in the composite material to the pressure head body, and thus the composite material can be heated even more efficiently.

In the configuration including the heat generating material layer, it is preferable that the heat insulating material layer is a resin material. With this configuration, the heat insulating material layer can further reduce transmission of the heat generated in the composite material to the pressure head body, and thus the composite material can be heated even more efficiently.

According to the present disclosure, a pressure head is provided facing a metallic nanocoil placed on a pre-reaction composite material. The pressure head includes a pressure head body and a high thermal conductive material layer. The pressure head body is formed of a material transparent to an electric field applied to the metallic nanocoil. The high thermal conductive material layer is provided on a side of the pressure head body facing the composite material, is transparent to the electric field applied to the metallic nanocoil, and is formed of a material having a thermal conductivity higher than that of the composite material.

With this configuration, the high thermal conductive material layer can distribute, in the in-plane direction, heat that has been generated in the metallic nanocoils, and thus the occurrence of temperature unevenness in the composite material during heating can be reduced. Thus, with this configuration, the occurrence of strength unevenness in the composite material obtained by reacting resin can be reduced, and thus a composite material with high quality can be obtained.

To solve the problem described above and achieve the object, an apparatus for forming a composite material according to claim 1 is disclosed.

With this configuration, the high thermal conductive material layer can distribute, in the in-plane direction, the heat that has been generated inside the composite material, and thus the occurrence of temperature unevenness in the composite material during heating can be reduced. Thus, with this configuration, the occurrence of strength unevenness in the composite material obtained by reacting resin can be reduced, and thus a composite material with high quality can be obtained.

To solve the problem described above and achieve the object, an apparatus for forming a composite material according to claim 9 is disclosed.

With this configuration, the high thermal conductive material layer can distribute, in the in-plane direction, the heat that has been generated in the metallic nanocoils, and thus the occurrence of temperature unevenness in the composite material during heating can be reduced. Thus, with this configuration, the occurrence of strength unevenness in the composite material obtained by reacting resin can be reduced, and thus a composite material with high quality can be obtained.

To solve the problem described above and achieve the object, a method for forming a composite material according to claim 10 is disclosed.

With this configuration, the high thermal conductive material layer can distribute, in the in-plane direction, heat that has been generated inside the composite material, and thus the occurrence of temperature unevenness in the composite material during heating can be reduced. Thus, with this configuration, the occurrence of strength unevenness in the composite material obtained by reacting resin can be reduced, and thus a composite material with high quality can be obtained.

To solve the problem described above and achieve the object, a method for forming a composite material according to claim 11 is disclosed.

With this configuration, the high thermal conductive material layer can distribute, in the in-plane direction, heat that has been generated in the metallic nanocoils, and thus the occurrence of temperature unevenness in the composite material during heating can be reduced. Thus, with this configuration, the occurrence of strength unevenness in the composite material obtained by reacting resin can be reduced, and thus a composite material with high quality can be obtained.

### Advantageous Effects of Invention

The present invention can provide an apparatus for forming a composite material, and a method for forming a composite material reducing the occurrence of temperature unevenness in a composite material during heating.

### Brief Description of Drawings

FIG. 1 is a schematic configuration diagram of an apparatus for forming a composite material according to a first embodiment of the present invention.
FIG. 2 is a flowchart of a method for forming a composite material according to the first embodiment of the present invention.
FIG. 3 is a diagram of an exemplary state of a composite material after being processed to be formed by the apparatus for forming a composite material according to the first embodiment of the present invention.
FIG. 4 is a schematic configuration diagram of an apparatus for forming a composite material according to a comparative example.
FIG. 5 is a diagram of an exemplary state of a composite material after being processed to be formed by the apparatus for forming a composite material according to the comparative example.
FIG. 6 is a graph of maximum temperature differences inside the composite materials, when the apparatus for forming a composite material according to the first embodiment of the present invention and the apparatus for forming a composite material according to the comparative example have processed to form respective composite materials.
FIG. 7 is a schematic configuration diagram of an apparatus for forming a composite material according to a second embodiment of the present invention.
FIG. 8 is a schematic configuration diagram of an apparatus for forming a composite material according to a third embodiment of the present invention.
FIG. 9 is a schematic configuration diagram of an apparatus for forming a composite material according to a fourth embodiment of the present invention.

### Description of Embodiments

The following describes embodiments according to the present invention in detail based on the accompanying drawings.

### First Embodiment

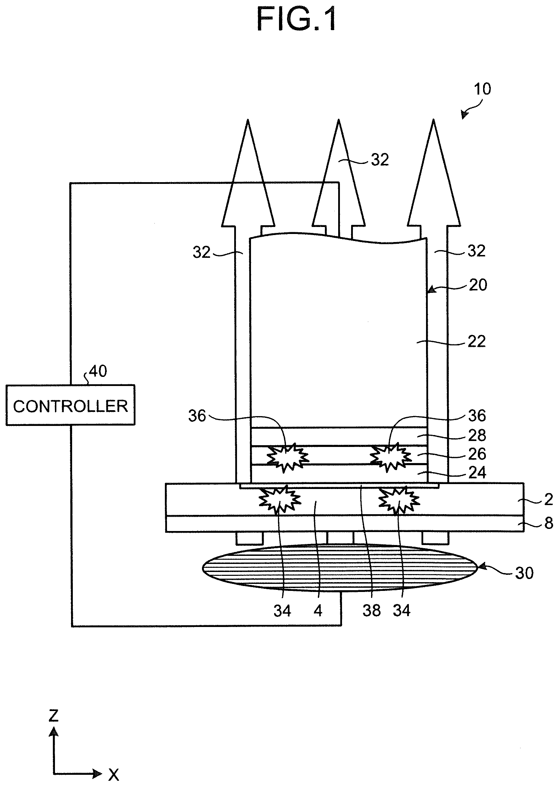

FIG. 1 is a schematic configuration diagram of an apparatus 10 for forming a composite material according to a first embodiment of the present invention. As illustrated in FIG. 1, the apparatus 10 for forming a composite material includes a pressure head 20, a magnetic field coil 30, and a controller 40. The apparatus 10 for forming a composite material reacts a composite material 2 before reaction in which reinforcing fibers are impregnated with resin before reaction while forming it into a certain size and a certain shape. Examples of the resin include a thermosetting resin, which makes a thermal curing reaction from a softened state or a semi-cured state to a cured state by being heated, and a thermoplastic resin, which makes a thermal fusion reaction by being heated. In the following, when the thermosetting resin and the thermoplastic resin are not distinguished from each other for the resin, the thermal curing reaction of the thermosetting resin and the thermal fusion reaction of the thermoplastic resin will be simply referred to as a reaction.

In the first embodiment, the composite material 2 is placed in a flat plate shape orthogonal to a direction along a Z direction in FIG. 1 as a vertical direction and extending along a direction including an X direction in FIG. 1 as a horizontal direction on a flat stage 8 extending along the horizontal direction and is formed in the apparatus 10 for forming a composite material. Specifically, the composite material 2 is placed such that the reinforcing fibers described below extend in the horizontal direction and is formed. That is to say, in the first embodiment, the vertical direction and a thickness direction of the composite material 2 match each other. In the first embodiment, a lower side in the vertical direction of the composite material 2 is referred to as one side, whereas an upper side in the vertical direction of the composite material 2 is referred to as another side. In the first embodiment, an area being subjected to pressure and heating by the pressure head 20 and the magnetic field coil 30 of the composite material 2 is referred to as a certain area 4. In the present invention, the composite material 2 is not limited to be placed in such a manner and may be placed in any manner. In the present invention, the composite material 2 is not limited to be formed into such a flat plate shape and may be formed into any shape such as a complicated shape having a curve. In the present invention, the certain area 4 is not limited to be such a partial area of the composite material 2 and may be the entire area of the composite material 2.

The reinforcing fibers contained in the composite material 2 have electric conductivity and thus induce an eddy current inside the composite material 2 by a magnetic field 32 applied by the magnetic field coil 30 described below. The reinforcing fibers contained in the composite material 2 induce the eddy current thereinside and thereby generate heat 34 by the electric resistance of the reinforcing fibers themselves. That is to say, the composite material 2 generate the heat 34 thereinside in accordance with the magnetic field 32. The heat 34 generated by the reinforcing fibers contained in the composite material 2 is transmitted to the resin contained in the composite material 2 and contributes to the reaction of the resin.

The composite material 2 has lightness in weight and high strength. Examples of the reinforcing fibers contained in the composite material 2 in the first embodiment include carbon fibers, but not limited thereto. Other metallic fibers may be used. Examples of the resin contained in the composite material 2 in the first embodiment include a resin having an epoxy resin in the case of the thermosetting resin. When the resin contained in the composite material 2 has an epoxy resin, the composite material 2 has further lightness in weight and higher strength, which is preferred. Examples of the resin in the case of the thermosetting resin in the first embodiment include a polyester resin and vinyl ester resin. Examples of the resin in the case of the thermoplastic resin in the first embodiment include a polyamide resin, a polypropylene resin, an acrylonitrile butadiene styrene (ABS) resin, polyether ether ketone (PEEK), polyether ketone ketone (PEKK), and polyphenylene sulfide (PPS). However, the resin is not limited to these resins and may be another resin.

The flat stage 8 is formed of a material that is transparent to the magnetic field 32 applied by the magnetic field coil 30, that is, a material that induces almost no eddy current thereinside by the magnetic field 32 applied by the magnetic field coil 30 and causes almost no heat generation thereinside in accordance with the magnetic field 32 applied by the magnetic field coil 30. In the first embodiment, the material forming the flat stage 8 is preferably a PEEK resin or ceramic, which are materials transparent to the magnetic field 32 and are high in pressure resistance and heat resistance.

As illustrated in FIG. 1, the pressure head 20 is provided facing the other side of the certain area 4 of the composite material 2 and is provided facing the magnetic field coil 30 in the vertical direction via the composite material 2 and the flat stage 8. The pressure head 20 presses the certain area 4 of the composite material 2 from the other side of the composite material 2.

As illustrated in FIG. 1, the pressure head 20 includes a pressure head body 22, a high thermal conductive material layer 24, a heat generating material layer 26, and a heat insulating material layer 28. In the pressure head 20, the heat insulating material layer 28 is provided on the lower side in the vertical direction of the pressure head body 22. In the pressure head 20, the heat generating material layer 26 is provided on the lower side in the vertical direction of the heat insulating material layer 28. In the pressure head 20, the high thermal conductive material layer 24 is provided on the lower side in the vertical direction of the heat generating material layer 26. By way of example, each of the high thermal conductive material layer 24, the heat generating material layer 26, and the heat insulating material layer 28 has the shape and size extending along the horizontal direction equal to the shape and size extending along the horizontal direction of the pressure head body 22. By way of example, each of the high thermal conductive material layer 24, the heat generating material layer 26, and the heat insulating material layer 28 has the uniform thickness along the vertical direction regardless of a position along the horizontal direction. The pressure head 20 has such a configuration and can thus press the composite material 2 while pressing the high thermal conductive material layer 24 against the composite material 2.

The pressure head body 22 is formed of a material transparent to the magnetic field 32 applied by the magnetic field coil 30. The material forming the pressure head body 22 is preferably a PEEK resin or ceramic, which are materials transparent to the magnetic field 32 and high in pressure resistance and heat resistance.

The pressure head body 22 is provided with a pressure cylinder (not illustrated) on the upper side in the vertical direction in FIG. 1, and this pressure cylinder is electrically connected to the controller 40. The controller 40 controls the pressure cylinder of the pressure head body 22, whereby the pressure head 20 can move up and down in the vertical direction relative to the composite material 2 and can change pressure applied toward the lower side in the vertical direction to the composite material 2. The pressure head 20 preferably presses the certain area 4 of the composite material 2 with 200 kPa or more and 800 kPa or less and more preferably presses it with 300 kPa or more and 600 kPa or less.

The high thermal conductive material layer 24 is provided so as to cover a face extending along the horizontal direction on the lower side in the vertical direction of the pressure head body 22 via the heat insulating material layer 28 and the heat generating material layer 26, on a side of the pressure head body 22 facing the certain area 4 of the composite material 2, that is, on the lower side in the vertical direction. The high thermal conductive material layer 24 is formed of a material that is transparent to the magnetic field 32 applied by the magnetic field coil 30 and has a thermal conductivity higher than that of the composite material 2.

The high thermal conductive material layer 24 has a thermal conductivity higher than that of the composite material 2 and can thus distribute, in an in-plane direction, the heat 34 that has been generated inside the composite material 2 and can thus form an entirely thermally equalized heated area 38 on the other side of the certain area 4 of the composite material 2. Thus, the high thermal conductive material layer 24 can reduce the occurrence of temperature unevenness in the composite material 2 during heating. Thus, the high thermal conductive material layer 24 can reduce the occurrence of strength unevenness in the composite material 2 obtained by reacting the resin and can thus contribute to obtaining the composite material 2 with high quality.

The high thermal conductive material layer 24 can transmit heat 36 described below that has been generated in the heat generating material layer 26 to the other side of the certain area 4 of the composite material 2 and cause the heat 36 to contribute to heating of the composite material 2. Thus, the high thermal conductive material layer 24 transmits the heat 36 to help efficiently heat the composite material 2.

The material forming the high thermal conductive material layer 24 is a material having a thermal conductivity of 20 W/m·K or more and is more preferably a material having a thermal conductivity of 100 W/m·K or more. Specifically, the material forming the high thermal conductive material layer 24 is preferably aluminum nitride having a thermal conductivity of 150 W/m·K or more and 285 W/m·K or less, silicon nitride having a thermal conductivity of 27 W/m·K or more and 50 W/m·K or less, sapphire and alumina having a thermal conductivity of 30 W/m·K or more and 40 W/m·K or less, silicon carbide having a thermal conductivity of 200 W/m·K or more, or a sheet material containing carbon fibers, Tyranno fibers, or the like having a thermal conductivity of 20 W/m·K or more as a unidirectional material in which no eddy current occurs in accordance with the magnetic field 32 applied by the magnetic field coil 30.

The heat generating material layer 26 is provided between the pressure head body 22 and the high thermal conductive material layer 24. The heat generating material layer 26 is formed of a material that generates the heat 36 in accordance with the magnetic field 32 applied by the magnetic field coil 30 and has a heat capacity smaller than that of the composite material 2. The heat generating material layer 26 induces a weak eddy current thereinside by the magnetic field 32 leaking to the pressure head 20, which has been applied by the magnetic field coil 30 but has not been used for generating the heat 34 by the composite material 2 and, in addition, generates the heat 36 thereinside owing to the electric resistance of the heat generating material layer 26 itself. The heat generating material layer 26 has a heat capacity smaller than that of the composite material 2, that is, is sufficiently thin, thus induces a sufficiently weak eddy current thereinside in accordance with the magnetic field 32 applied by the magnetic field coil 30, thus prevents cancellation of the magnetic field 32 applied by the magnetic field coil 30 owing to an induced strong eddy current and thus does not hinder heating of the composite material 2. This helps efficiently heat the composite material 2 in accordance with the magnetic field 32 applied by the magnetic field coil 30.

The material forming the heat generating material layer 26 is preferably a metallic thin film and is specifically preferably aluminum foil with a thickness of 100 µm or less, more preferably aluminum foil with a thickness of 20 µm or less, and even more preferably aluminum foil with a thickness of 10 µm or more and 20 µm or less.

The heat insulating material layer 28 is provided between the pressure head body 22 and the heat generating material layer 26. That is to say, the heat insulating material layer 28 is provided on a side on which the pressure head body 22 is present with respect to the high thermal conductive material layer 24 and the heat generating material layer 26. The heat insulating material layer 28 is formed of a material having a thermal conductivity lower than that of the pressure head body 22. The material forming the heat insulating material layer 28 is specifically preferably a resin material. The heat insulating material layer 28 reduces transmission of the heat 34 that has been generated in the reinforcing fibers contained in the composite material 2 and the heat 36 that has been generated in the heat generating material layer 26 to the pressure head body 22 to help the heat 34 and the heat 36 efficiently contribute to heating of the composite material 2. Thus, the heat insulating material layer 28 helps efficiently heat the composite material 2.

As illustrated in FIG. 1, the magnetic field coil 30 is provided facing the one side of the certain area 4 of the composite material 2 and is provided facing the pressure head 20 in the vertical direction via the flat stage 8 and the composite material 2. The magnetic field coil 30 applies the magnetic field 32 to the certain area 4 of the composite material 2 from the one side of the composite material 2.

In the first embodiment, by way of example, one coil is placed as the magnetic field coil 30. Alternatively, a plurality of coils may be arranged in a certain shape, or in a square shape, for example. The magnetic field coil 30 applies the magnetic field 32 to an area equivalent to an area in the horizontal direction in which the coil is placed. In the first embodiment, the area to which the magnetic field coil 30 applies the magnetic field 32 corresponds to the certain area 4 of the composite material 2.

The coil contained in the magnetic field coil 30 is directed to a direction in which a central axis of the coil crosses a face in which the composite material 2 extends. The magnetic field coil 30 generates the magnetic field 32 along a direction crossing the face in which the composite material 2 extends to generate the magnetic field 32 along a direction crossing a direction in which the reinforcing fibers contained in the composite material 2 extend. The magnetic field coil 30 is placed such that an end on the upper side in the vertical direction of the magnetic field coil 30 is spaced apart from a face on the one side of the composite material 2 by a certain distance. This certain distance is, for example, 1.5 cm.

The coil contained in the magnetic field coil 30 is preferably directed to a direction in which the central axis of the coil is along the vertical direction. In this case, the magnetic field coil 30 generates the magnetic field 32 along a direction orthogonal to the face in which the composite material 2 extends to generate the magnetic field 32 along a direction orthogonal to the direction in which the reinforcing fibers contained in the composite material 2 extend. The magnetic field 32 along the direction orthogonal to the direction in which the reinforcing fibers of the composite material 2 extend is applied, whereby the reinforcing fibers contained in the composite material 2 efficiently induce an eddy current and can thus efficiently produce the heat generation 34. Thus, the magnetic field coil 30 can efficiently heat the certain area 4 of the composite material 2.

The magnetic field coil 30 is electrically connected with the controller 40. The magnetic field coil 30 is controlled by the controller 40 and can thereby change the magnitude, frequency, and the like of the magnetic field 32 applied toward the upper side in the vertical direction to the composite material 2. The magnetic field coil 30 preferably applies a high-frequency magnetic field with 900 kHz or more to the certain area 4 of the composite material 2.

The controller 40 is electrically connected with the pressure cylinder provided in the pressure head body 22. The controller 40 is electrically connected with the magnetic field coil 30. The controller 40 controls the pressure cylinder to control the pressure head 20 and can thereby control a relative position with respect to the composite material 2 in the vertical direction of the pressure head 20, pressure applied toward the lower side in the vertical direction to the composite material 2, and the like. The controller 40 controls a current flowing through the magnetic field coil 30, can thereby control the magnitude and frequency of the magnetic field 32 applied by the magnetic field coil 30, and can thereby control heating temperature, temperature rising rate, and heating time heating the composite material 2 in accordance with a specific resin composition of the composite material 2 and the like.

The controller 40 includes a storage unit and a processing unit. For example, the storage unit has storage devices such as a random access memory (RAM), a read only memory (ROM), and a flash memory and stores therein software programs to be processed by the processing unit, data referred to by the software programs, and the like. The storage unit also functions as a storage area in which the processing unit temporarily stores a processing result and the like. The processing unit reads the software programs and the like from the storage unit and processes them to exhibit functions corresponding to the contents of the software programs, or specifically various functions enabling execution of the method for forming a composite material executed by the apparatus 10 for forming a composite material.

The apparatus 10 for forming a composite material may be provided with a moving mechanism (not illustrated) changing a position in the horizontal direction of the pressure head 20 relative to the composite material 2 and a position in the horizontal direction of the magnetic field coil 30 relative to the composite material 2 in a synchronized manner. This moving mechanism is controlled by the controller 40 and can move the certain area 4 as an area to be pressed by the pressure head 20 and an area to which the magnetic field 32 is applied by the magnetic field coil 30 in the composite material 2 during forming processing by the apparatus 10 for forming a composite material. The controller 40 can determine at any time to which area of the composite material 2 the certain area 4 has moved.

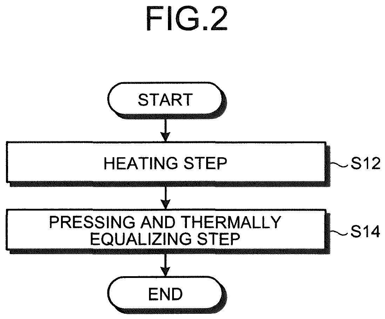

The following describes the function or behavior of the apparatus 10 for forming a composite material according to the first embodiment having the above configuration. FIG. 2 is a flowchart of a method for forming a composite material according to the first embodiment of the present invention. The following describes the method for forming a composite material according to the first embodiment as a method of processing executed by the apparatus 10 for forming a composite material according to the first embodiment with reference to FIG. 2. As illustrated in FIG. 2, the method for forming a composite material according to the first embodiment has a heating step S12 and a pressing and thermally equalizing step S14.

First, a preparation step before entering the heating step S12 and the pressing and thermally equalizing step S14 is performed. The preparation step is a step of placing the composite material 2 before reaction in which the reinforcing fibers are impregnated with the resin before reaction in a flat plate shape extending along the horizontal direction on the upper side in the vertical direction of the flat stage 8.

The heating step S12 is performed after the preparation step. At the heating step S12, first, the controller 40 causes the magnetic field coil 30 to be moved to and placed at a position facing the one side of the certain area 4 of the composite material 2 placed on the flat stage 8 in the vertical direction toward the certain area 4 of the composite material 2. At the heating step S12, next, the controller 40 causes current to flow through the magnetic field coil 30 to apply the magnetic field 32 from the one side of the composite material 2 by the magnetic field coil 30 and to heat the certain area 4 of the composite material 2.

At the heating step S12, the components other than the composite material 2 and the heat generating material layer 26, i.e., the flat stage 8, the pressure head body 22, the high thermal conductive material layer 24, and the heat insulating material layer 28, are all transparent to the magnetic field 32 applied by the magnetic field coil 30, thus induce almost no eddy current thereinside by the magnetic field 32, and thus generate almost no heat thereinside in accordance with the magnetic field 32.

At the heating step S12, in the composite material 2, the reinforcing fibers present in the certain area 4 of the composite material 2 induce an eddy current thereinside by the magnetic field 32, and further generate the heat 34 thereinside owing to the electric resistance of the reinforcing fibers themselves. Thus, this heat 34 is transmitted to the resin, whereby the composite material 2 is heated, and the resin is reacted.

At the heating step S12, in addition, the heat generating material layer 26 induces a weak eddy current thereinside by the magnetic field 32, and further generates the heat 36 thereinside owing to the electric resistance of the heat generating material layer 26 itself. Thus, this heat 36 is transmitted to the resin, whereby the composite material 2 is helped to be heated, and the resin is helped to be reacted.

The pressing and thermally equalizing step S14 is performed after the preparation step and in parallel with the heating step S12. At the pressing and thermally equalizing step S14, first, the controller 40 causes the pressure head 20 to be moved to a position facing the other side of the composite material 2 placed on the flat stage 8 in the vertical direction to direct a side of the pressure head 20 on which the high thermal conductive material layer 24 is provided to the certain area 4 of the composite material 2. At the pressing and thermally equalizing step S14, next, the controller 40 performs control such that the certain area 4 of the composite material 2 is pressed from the other side while pressing the side of the pressure head 20 on which the high thermal conductive material layer 24 is provided against the other side of the certain area 4 of the composite material 2.

At the pressing and thermally equalizing step S14, the side of the pressure head 20 on which the high thermal conductive material layer 24 is provided is pressed against the certain area 4 of the composite material 2, and thus the heat 34 that has been sparsely generated in the certain area 4 of the composite material 2 at the heating step S12 is transmitted to the high thermal conductive material layer 24. The high thermal conductive material layer 24 has a thermal conductivity higher than that of the composite material 2 and thus distributes the heat 34 in the in-pane direction to form the entirely thermally equalized heated area 38 on the other side of the certain area 4 of the composite material 2. Thus, the high thermal conductive material layer 24 can reduce the occurrence of temperature unevenness in the composite material 2 during heating. Thus, the high thermal conductive material layer 24 can reduce the occurrence of strength unevenness in the composite material 2 obtained by reacting the resin and can thus contribute to obtaining the composite material 2 with high quality.

At the pressing and thermally equalizing step S14, in addition, the heat 36 that has been generated in the heat generating material layer 26 is transmitted to the high thermal conductive material layer 24. Thus, the high thermal conductive material layer 24 can raise the temperature of the entirely thermally equalized heated area 38 by the heat 36. Thus, the high thermal conductive material layer 24 transmits the heat generation 36 to help efficiently heat the composite material 2.

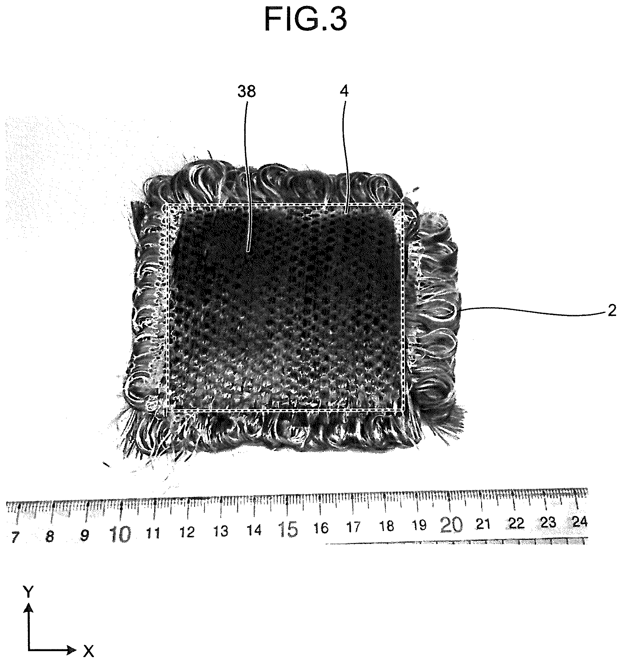

FIG. 3 is a diagram of an exemplary state of the composite material 2 after being formed by the apparatus 10 for forming a composite material according to the first embodiment of the present invention. As illustrated in FIG. 3, in the composite material 2 after being formed by the apparatus 10 for forming a composite material, the entire certain area 4 of the composite material 2 has blackened. This result indicates that the resin has reacted across the entire certain area 4 of the composite material 2 and represents a trace indicating that the thermally equalized heated area 38 was formed across the entire certain area 4 of the composite material 2.

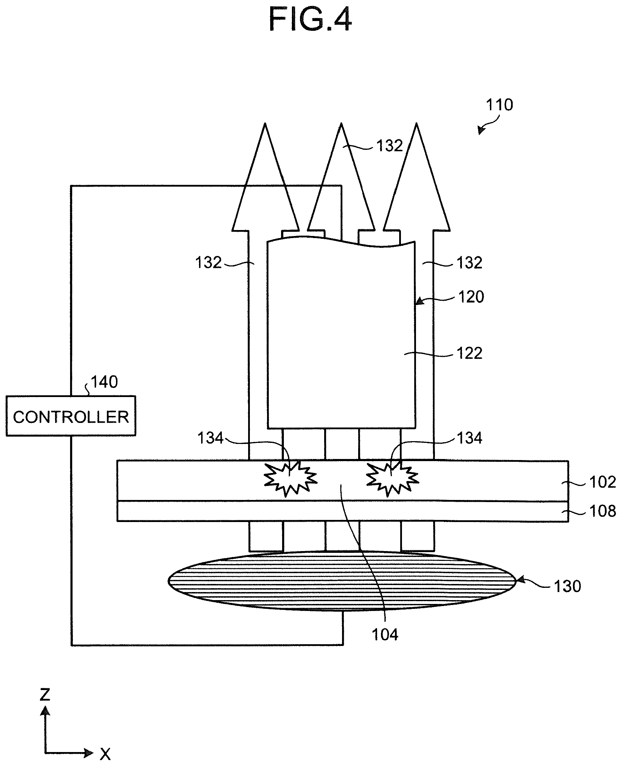

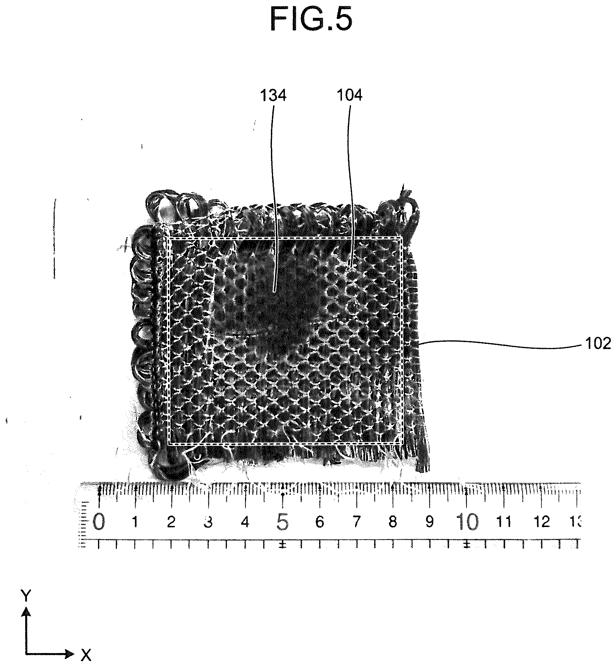

FIG. 4 is a schematic configuration diagram of an apparatus 110 for forming a composite material according to a comparative example. FIG. 5 is a diagram of an exemplary state of a composite material 102 after being formed by the apparatus 110 for forming a composite material according to the comparative example. The apparatus 110 for forming a composite material according to the comparative example has a configuration in which the high thermal conductive material layer 24, the heat generating material layer 26, and the heat insulating material layer 28 are not provided in the pressure head 20 of the apparatus 10 for forming a composite material according to the first embodiment. The apparatus 110 for forming a composite material according to the comparative example is similar to the apparatus 10 for forming a composite material according to the first embodiment for the rest of the configuration. The following describes the apparatus 110 for forming a composite material according to the comparative example with a different symbol attached in order to distinguish it from the apparatus 10 for forming a composite material according to the first embodiment. As illustrated in FIG. 4, the apparatus 110 for forming a composite material according to the comparative example includes a pressure head 120 including only a pressure head body 122, a magnetic field coil 130, and a controller 140. The magnetic field coil 130 is controlled by the controller 140 to apply a magnetic field 132 to a certain area 104 of the composite material 102 placed in a flat plate shape extending along the horizontal direction on the upper side in the vertical direction of a flat stage 108 from the one side of the composite material 102. The composite material 102 induces an eddy current thereinside by the magnetic field 132 and thereby produces heat 134 thereinside.

As illustrated in FIG. 5, in the composite material 102 after being formed by the apparatus 110 for forming a composite material, only a partial area on the upper side in FIG. 5 of the certain area 104 of the composite material 102 has blackened. This result indicates that the resin has reacted only in this partial area of the certain area 104 of the composite material 102 and represents a trace indicating that the heat 134 has been generated in this partial area of the certain area 104 of the composite material 102, and the heat 134 did not transmit in the horizontal direction.

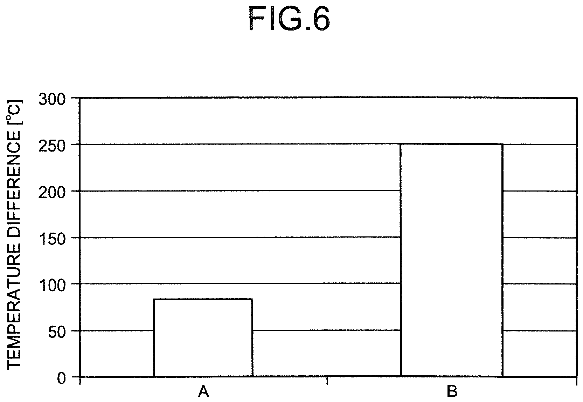

FIG. 6 is a graph of maximum temperature differences inside the composite materials 2 and 102, when the apparatus 10 for forming a composite material according to the first embodiment of the present invention and the apparatus 110 for forming a composite material according to the comparative example formed the composite materials 2 and 102, respectively. The letter A in FIG. 6 represents the temperature difference between a maximum temperature and a minimum temperature inside the composite material 2 when the apparatus 10 for forming a composite material according to the first embodiment formed the composite material 2, and this temperature difference was about 80°C as illustrated in FIG. 6. The letter B in FIG. 6 represents the temperature difference between a maximum temperature and a minimum temperature inside the composite material 102 when the apparatus 110 for forming a composite material according to the comparative example formed the composite material 102, and this temperature difference was about 250°C as illustrated in FIG. 6. It was revealed from this result that the apparatus 10 for forming a composite material according to the first embodiment is provided with the high thermal conductive material layer 24 on the side of the pressure head body 22 facing the certain area 4 of the composite material 2 and can thereby reduce the temperature difference between the maximum temperature and the minimum temperature to about one third.

The pressure head 20, the apparatus 10 for forming a composite material, and the method for forming a composite material by the apparatus 10 for forming a composite material have the above configurations, thus the high thermal conductive material layer 24 can distribute, in the in-plane direction, the heat 34 that has been generated inside the composite material 2, and thus the occurrence of temperature unevenness in the composite material 2 during heating can be reduced. Thus, the pressure head 20, the apparatus 10 for forming a composite material, and the method for forming a composite material by the apparatus 10 for forming a composite material can reduce the occurrence of strength unevenness in the composite material 2 obtained by reacting resin and can thus obtain the composite material 2 with high quality.

In the pressure head 20, the apparatus 10 for forming a composite material, and the method for forming a composite material by the apparatus 10 for forming a composite material, the material forming the high thermal conductive material layer 24 contains any one of aluminum nitride, silicon nitride, sapphire, alumina, silicon carbide, and the sheet material containing a unidirectional material in which no eddy current occurs by the magnetic field 32 applied by the magnetic field coil 30. Thus, in the pressure head 20, the apparatus 10 for forming a composite material, and the method for forming a composite material by the apparatus 10 for forming a composite material, the high thermal conductive material layer 24 can quickly distribute, in the in-plane direction, the heat 34 that has been generated inside the composite material 2, thus further reducing the occurrence of temperature unevenness in the composite material 2 during heating.

In the pressure head 20, the apparatus 10 for forming a composite material, and the method for forming a composite material by the apparatus 10 for forming a composite material further include the heat generating material layer 26 provided between the pressure head body 22 and the high thermal conductive material layer 24, generating heat in accordance with the magnetic field 32 applied by the magnetic field coil 30, and formed of a material having a heat capacity smaller than that of the composite material 2 in heat capacity. Thus, the heat generating material layer 26 can generate the heat 36 in accordance with the magnetic field 32 leaking to the pressure head 20, which has been applied by the magnetic field coil 30 but has not been used for generating the heat 34 by the composite material 2, thus heating the composite material 2 efficiently.

In the pressure head 20, the apparatus 10 for forming a composite material, and the method for forming a composite material by the apparatus 10 for forming a composite material, the heat generating material layer 26 is a metallic thin film. Thus, in the pressure head 20, the apparatus 10 for forming a composite material, and the method for forming a composite material by the apparatus 10 for forming a composite material, the heat generating material layer 26 can generate heat more efficiently, thus heating the composite material 2 more efficiently.

The pressure head 20, the apparatus 10 for forming a composite material, and the method for forming a composite material by the apparatus 10 for forming a composite material further include the heat insulating material layer 28 provided between the pressure head body 22 and the heat generating material layer 26 and formed of the material having a thermal conductivity lower than that of the pressure head body 22. Thus, in the pressure head 20, the apparatus 10 for forming a composite material, and the method for forming a composite material by the apparatus 10 for forming a composite material, the heat insulating material layer 28 can reduce transmission of the heat 34 and 36 generated in the composite material 2 and the heat generating material layer 26, respectively, toward the pressure head body 22, thus heating the composite material 2 even more efficiently.

In the pressure head 20, the apparatus 10 for forming a composite material, and the method for forming a composite material by the apparatus 10 for forming a composite material, the heat insulating material layer 28 is a resin material. Thus, in the pressure head 20, the apparatus 10 for forming a composite material, and the method for forming a composite material by the apparatus 10 for forming a composite material, the heat insulating material layer 28 can further reduce transmission of the heat 34 and 36 generated in the composite material 2 and the heat generating material layer 26, respectively, toward the pressure head body 22, thus heating the composite material 2 even more efficiently.

### Second Embodiment

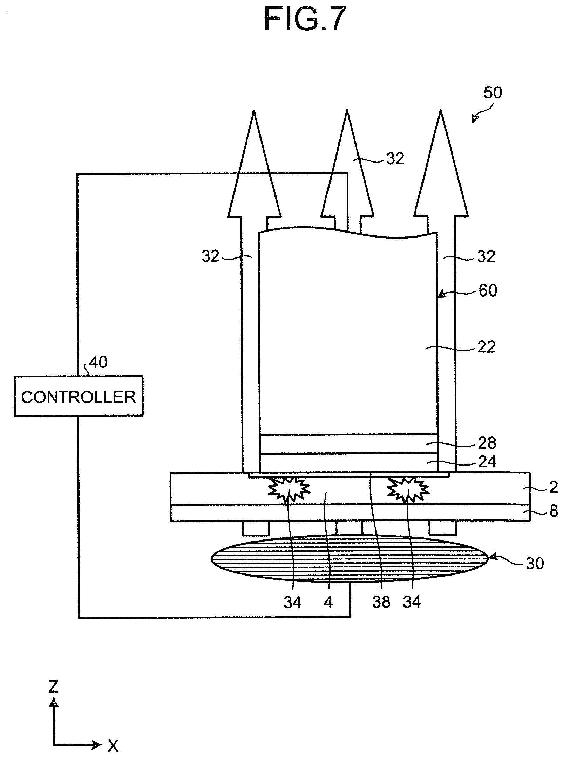

FIG. 7 is a schematic configuration diagram of an apparatus 50 for forming a composite material according to a second embodiment of the present invention. The apparatus 50 for forming a composite material according to the second embodiment has a configuration in which the heat generating material layer 26 is omitted from the pressure head 20 of the apparatus 10 for forming a composite material according to the first embodiment. The apparatus 50 for forming a composite material according to the second embodiment is similar to the apparatus 10 for forming a composite material according to the first embodiment for the rest of the configuration. The following describes a pressure head 60 of the apparatus 50 for forming a composite material according to the second embodiment with a different symbol attached in order to distinguish it from the pressure head 20 of the apparatus 10 for forming a composite material according to the first embodiment. For the other components of the apparatus 50 for forming a composite material according to the second embodiment similar to those of the first embodiment, the same symbol group as that of the first embodiment is used, and detailed descriptions thereof are omitted.

As illustrated in FIG. 7, the apparatus 50 for forming a composite material includes the pressure head 60, the magnetic field coil 30, and the controller 40. As illustrated in FIG. 7, the pressure head 60 includes the pressure head body 22, the high thermal conductive material layer 24, and the heat insulating material layer 28.

The following describes the function or behavior of the apparatus 50 for forming a composite material according to the second embodiment having the above configuration. A method for forming a composite material according to the second embodiment as a method of processing executed by the apparatus 50 for forming a composite material according to the second embodiment has a configuration in which the part producing the heat 36 by the heat generating material layer 26 is omitted at the heating step S12 of the method for forming a composite material according to the first embodiment as the method of processing executed by the apparatus 10 for forming a composite material according to the first embodiment. The method for forming a composite material according to the second embodiment is similar to the method for forming a composite material according to the first embodiment for the rest of the configuration.

The pressure head 60, the apparatus 50 for forming a composite material, and the method for forming a composite material by the apparatus 50 for forming a composite material have the above configurations and thus provide effects similar to those of the pressure head 20, the apparatus 10 for forming a composite material, and the method for forming a composite material by the apparatus 10 for forming a composite material except for the effect caused by the heat generating material layer 26.

### Third Embodiment

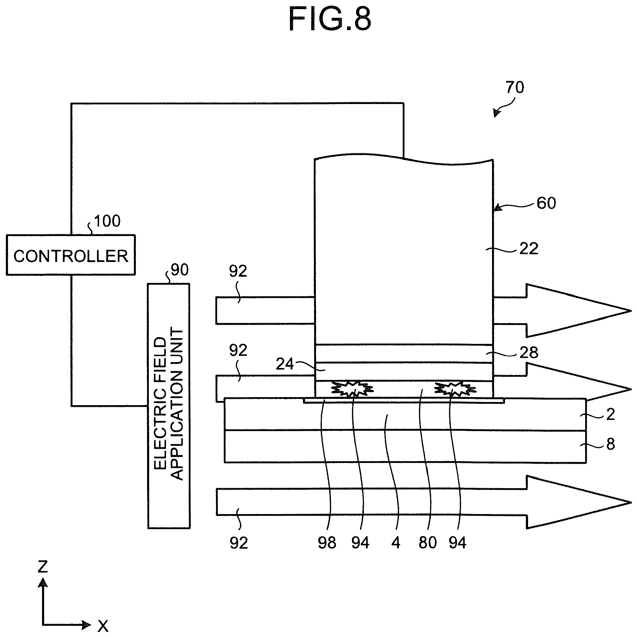

FIG. 8 is a schematic configuration diagram of an apparatus 70 for forming a composite material according to a third embodiment of the present invention. As compared with the configuration of the apparatus 50 for forming a composite material according to the second embodiment, the apparatus 70 for forming a composite material according to the third embodiment has a configuration in which a metallic nanocoil sheet 80 is further placed on the side of the high thermal conductive material layer 24 facing the certain area 4 of the composite material 2, and the magnetic field coil 30 applying the magnetic field 32 is changed to an electric field application unit 90 applying an electric field 92. The apparatus 70 for forming a composite material according to the third embodiment is similar to the apparatus 50 for forming a composite material according to the second embodiment for the rest of the configuration. The following describes a controller 100 of the apparatus 70 for forming a composite material according to the third embodiment with a different symbol attached in order to distinguish it from the controller 40 of the apparatus 50 for forming a composite material according to the second embodiment. For the other components of the apparatus 70 for forming a composite material according to the third embodiment similar to those of the second embodiment, the same symbol group as that of the second embodiment is used, and detailed descriptions thereof are omitted.

As illustrated in FIG. 8, the apparatus 70 for forming a composite material includes the pressure head 60, the electric field application unit 90, the controller 100, and the metallic nanocoil sheet 80. The pressure head 60 includes the pressure head body 22, the high thermal conductive material layer 24, and the heat insulating material layer 28, and the pressure head body 22, the high thermal conductive material layer 24, and the heat insulating material layer 28 are each formed of a material transparent to the electric field 92 applied by the electric field application unit 90. As the pressure head body 22 and the heat insulating material layer 28, respective materials similar to those exemplified in the first embodiment are exemplified. As the high thermal conductive material layer 24, exemplified are materials similar to those except for the sheet material containing carbon fibers, Tyranno fibers, or the like having a thermal conductivity of 20 W/m·K or more as a unidirectional material in which no eddy current occurs in accordance with the magnetic field 32 applied by the magnetic field coil 30 among the materials exemplified in the first embodiment. The pressure head 60 is provided such that the side on which the high thermal conductive material layer 24 is provided faces the metallic nanocoil sheet 80. The metallic nanocoil sheet 80 is placed on the other side of the certain area 4 of the composite material 2. The metallic nanocoil sheet 80 is a sheet to which metallic nanocoils are applied. The metallic nanocoils are applied by being dispersed in a solution and being sprayed.

The metallic nanocoils applied to the metallic nanocoil sheet 80 increase in the amount of molecular motion by the electric field 92 applied by the electric field application unit 90 in an axial direction of the metallic nanocoils to induce heat 94 inside the metallic nanocoils. In contrast, the composite material 2 does not generate any heat even when the electric field 92 is applied. Thus, the metallic nanocoil sheet 80 is placed on the other side of the certain area 4 of the composite material 2, whereby the certain area 4 of the composite material 2 can be made to a state that can selectively be heated by the electric field 92 applied by the electric field application unit 90 along a direction in which the certain area 4 of the composite material 2 extends. The metallic nanocoils have a diameter of about 100 µm. The diameter of metallic wires forming the metallic nanocoils is about 90 nm. As to a placement of the metallic nanocoils, the placement of the metallic nanocoil sheet 80 is exemplified in the third embodiment, but this is not limited thereto. The metallic nanocoils may be applied to the other side of the certain area 4 of the composite material 2 or may be contained inside the certain area 4 of the composite material 2 in advance.

The pressure head 60 and the metallic nanocoil sheet 80 are separately provided in the third embodiment, but not limited thereto. The pressure head 60 and the metallic nanocoil sheet 80 may be integrated with each other.

As illustrated in FIG. 8, the electric field application unit 90 is provided to be directed to a direction in which the certain area 4 of the composite material 2 extends. The electric field application unit 90 applies the electric field 92 toward the certain area 4 of the composite material 2 along the direction in which the certain area 4 of the composite material 2 extends. As the electric field application unit 90, a power source and a pair of electrodes are exemplified.

The following describes the function or behavior of the apparatus 70 for forming a composite material according to the third embodiment having the above configuration. A method for forming a composite material according to the third embodiment as a method of processing executed by the apparatus 70 for forming a composite material according to the third embodiment includes the heating step S12 and the pressing and thermally equalizing step S14 that are different from those of the method for forming a composite material according to the second embodiment, as follows. The heating step S12 according to the second embodiment includes directly heating the composite material 2 by applying the magnetic field 32 by the magnetic field coil 30, whereas the heating step S12 according to the third embodiment includes indirectly heating the composite material 2 via the metallic nanocoil sheet 80 by applying the electric field 92 by the electric field application unit 90. The pressing and thermally equalizing step S14 according to the third embodiment is different from the pressing and thermally equalizing step S14 according to the second embodiment and is changed in accordance with the heating step S12 according to the third embodiment. The method for forming a composite material according to the third embodiment is similar to the method for forming a composite material according to the second embodiment for the rest of the configuration.

Specifically, in the method for forming a composite material according to the third embodiment, at the heating step S12, first, the metallic nanocoil sheet 80 is placed on the other side of the certain area 4 of the composite material 2, and the controller 100 causes the electric field application unit 90 to be moved to and placed at a position directed to the direction in which the certain area 4 of the composite material 2 placed on the flat stage 8 extends toward the certain area 4 of the composite material 2. At the heating step S12, next, the controller 100 causes voltage to be applied to the electric field application unit 90 to apply the electric field 92 along the direction in which the certain area 4 of the composite material 2 extends by the electric field application unit 90 and to heat the certain area 4 of the composite material 2.

At the heating step S12, the metallic nanocoil sheet 80 increases in the amount of molecular motion by application of the electric field 92 to induce the heat 94 inside the metallic nanocoils contained in the metallic nanocoil sheet 80. The heat 94 that has been generated inside the metallic nanocoil sheet 80 transmits to the certain area 4 of the composite material 2. Thus, this heat 94 is transmitted to the resin, whereby the composite material 2 is heated, and the resin is reacted.

At the pressing and thermally equalizing step S14, the heat 94 that has been generated inside the metallic nanocoil sheet 80 transmits to the high thermal conductive material layer 24 adjacent to the metallic nanocoil sheet 80, distributes in the in-plane direction by the high thermal conductive material layer 24, and forms an entirely thermally equalized heated area 98 on the other side of the certain area 4 of the composite material 2.

The pressure head 60, the apparatus 70 for forming a composite material, and the method for forming a composite material by the apparatus 70 for forming a composite material according to the third embodiment have the above configurations and thus provide effects similar to those of the pressure head 60, the apparatus 50 for forming a composite material, and the method for forming a composite material by the apparatus 50 for forming a composite material according to the second embodiment.

The pressure head 60 and the apparatus 70 for forming a composite material according to the third embodiment may further be provided with the heat generating material layer 26 similar to that of the pressure head 20 and the apparatus 10 for forming a composite material according to the first embodiment. However, in this case, as the heat generating material layer 26, not the metallic thin film exemplified in the first embodiment, but another material generating heat by application of the electric field 92 by the electric field application unit 90 is used. In this case, the pressure head 60, the apparatus 70 for forming a composite material, and the method for forming a composite material by the apparatus 70 for forming a composite material according to the third embodiment provide effects similar to those caused by the heat generating material layer 26 in the pressure head 20, the apparatus 10 for forming a composite material, and the method for forming a composite material by the apparatus 10 for forming a composite material.

In the pressure head 60 and the apparatus 70 for forming a composite material according to the third embodiment, the electric field application unit 90 may be changed to the magnetic field coil 30 similar to that of the pressure head 20 and the apparatus 10 for forming a composite material according to the first embodiment. In this case, the metallic nanocoils contained in the metallic nanocoil sheet 80 induce a sufficient eddy current thereinside by a magnetic field smaller than the magnetic field 32 applied by the magnetic field coil 30 in the first embodiment and thereby generate the heat 94 in sufficient magnitude thereinside. Thus, the pressure head 60 and the apparatus 70 for forming a composite material according to the third embodiment can make the magnetic field 32 applied by the magnetic field coil 30 smaller than that of the pressure head 20 and the apparatus 10 for forming a composite material according to the first embodiment. Also in this case, the pressure head 60, the apparatus 70 for forming a composite material, and the method for forming a composite material by the apparatus 70 for forming a composite material according to the third embodiment provide effects similar to those of the pressure head 20, the apparatus 10 for forming a composite material, and the method for forming a composite material by the apparatus 10 for forming a composite material according to the first embodiment for the rest thereof.

### Fourth Embodiment

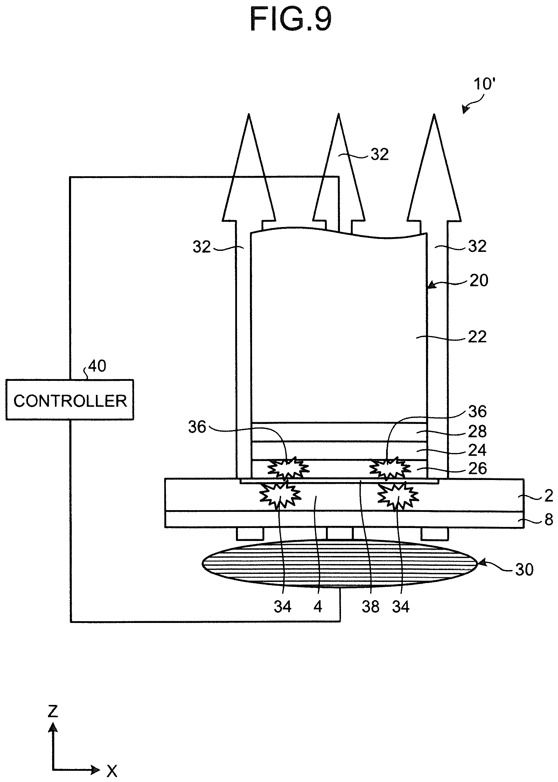

FIG. 9 is a schematic configuration diagram of an apparatus 10' for forming a composite material according to a fourth embodiment of the present invention. The apparatus 10' for forming a composite material of the fourth embodiment has a configuration in which the positional relation in the vertical direction between the high thermal conductive material layer 24 and the heat generating material layer 26 is reversed in the apparatus 10 for forming a composite material according to the first embodiment. The apparatus 10' for forming a composite material according to the fourth embodiment is similar to the apparatus 10 for forming a composite material according to the first embodiment for the rest of the configuration. The following describes the apparatus 10' for forming a composite material according to the fourth embodiment with a different symbol attached in order to distinguish it from the apparatus 10 for forming a composite material according to the first embodiment. For the other components of the apparatus 10' for forming a composite material according to the fourth embodiment similar to those of the first embodiment, the same symbol group as that of the first embodiment is used, and detailed descriptions thereof are omitted.

As illustrated in FIG. 9, the heat generating material layer 26 of the apparatus 10' for forming a composite material is provided on a side of the high thermal conductive material layer 24 facing the composite material 2. That is to say, in the pressure head 20 of the apparatus 10' for forming a composite material, the heat insulating material layer 28 is provided on the lower side in the vertical direction of the pressure head body 22, the high thermal conductive material layer 24 is provided on the lower side in the vertical direction of the heat insulating material layer 28, and the heat generating material layer 26 is provided on the lower side in the vertical direction of the high thermal conductive material layer 24.

The function or behavior of the apparatus 10' for forming a composite material according to the fourth embodiment having the above configuration is nearly similar to the function or behavior of the apparatus 10 for forming a composite material according to the first embodiment. That is to say, a method for forming a composite material according to a fourth embodiment as a method of processing executed by the apparatus 10' for forming a composite material according to the fourth embodiment is nearly similar to the method for forming a composite material according to the first embodiment as the method of processing executed by the apparatus 10 for forming a composite material according to the first embodiment.

The pressure head 20 of the apparatus 10' for forming a composite material, the apparatus 10' for forming a composite material, and the method for forming a composite material by the apparatus 10' for forming a composite material have the above configurations and thus provide effects similar to those of the pressure head 20 of the apparatus 10 for forming a composite material, the apparatus 10 for forming a composite material, and the method for forming a composite material by the apparatus 10 for forming a composite material.

### Reference Signs List

2, 102 Composite material
4, 104 Certain area
8, 108 Flat stage
10, 10', 50, 70, 110 Apparatus for forming composite material
20, 60, 120 Pressure head
22, 122 Pressure head body
24 High thermal conductive material layer
26 Heat generating material layer
28 Heat insulating material layer
30, 130 Magnetic field coil
32, 132 Magnetic field
34, 36, 94, 134 Heat generation
38, 98 Heated area
40, 100, 140 Controller
80 Metallic nanocoil sheet
90 Electric field application unit
92 Electric field

## Claims

1. An apparatus for forming a composite material (10, 10', 50), the apparatus (10, 10', 50) comprising:
a pressure head provided facing a magnetic field coil via a pre-reaction composite material, the magnetic field coil being provided on one side of the composite material, the pressure head being provided on another side of the composite material, the pressure head (20) comprising a pressure head body (22) formed of a material transparent to a magnetic field (32) applied by a magnetic field coil (30); and
a magnetic field coil (30) configured for applying a magnetic field (32) to a pre-reaction composite material (2) from one side of the composite material (2) to heat the composite material (2),
**characterized in that** the pressure head (20) further comprises a high thermal conductive material layer (24) provided on a side of the pressure head body (22) facing the composite material (2), being transparent to the magnetic field (32) applied by the magnetic field coil (30), and formed of a material having a thermal conductivity of 20 W/m·K or more which is higher than the thermal conductivity of the composite material (2).

2. The apparatus for forming a composite material (10, 10', 50) according to claim 1, wherein the material forming the thermal conductive material layer (24) contains any one of aluminum nitride, silicon nitride, sapphire, alumina, silicon carbide, and a sheet material containing a unidirectional material in which no eddy current occurs in accordance with the magnetic field (32) applied by the magnetic field coil (30) .

3. The apparatus for forming a composite material (10, 10', 50) according to claim 1 or 2, further comprising a heat generating material layer (26) provided between the pressure head body (22) and the thermal conductive material layer (24), generating heat in accordance with the magnetic field (32) applied by the magnetic field coil (30), and formed of a material having a heat capacity smaller than that of the composite material (2).

4. The apparatus for forming a composite material (10, 10', 50) according to claim 1 or 2, further comprising a heat generating material layer (26) provided on a side of the thermal conductive material layer (24) facing the composite material (2), generating heat in accordance with the magnetic field (32) applied by the magnetic field coil (30), and formed of a material having a heat capacity smaller than that of the composite material (2).

5. The apparatus for forming a composite material (10, 10', 50) according to claim 3 or 4, wherein the heat generating material layer (26) is a metallic thin film.

6. The apparatus for forming a composite material (10, 10', 50) according to any one of claims 3 to 5, further comprising a heat insulating material layer (28) provided on a side on which the pressure head body (22) is present with respect to the thermal conductive material layer (24) and the heat generating material layer (26) and formed of a material having a thermal conductivity lower than that of the pressure head body (22).

7. The apparatus for forming a composite material (10, 10', 50) according to claim 1 or 2, further comprising a heat insulating material layer (28) provided between the pressure head body (22) and the thermal conductive material layer (24) and formed of a material having a thermal conductivity lower than that of the pressure head body (2).

8. The apparatus for forming a composite material (10, 10', 50) according to claim 6 or 7, wherein the heat insulating material layer (28) is a resin material.

9. An apparatus for forming a composite material (70), the apparatus (70) comprising a pressure head (60) provided facing a metallic nanocoil placed on a pre-reaction composite material and being **characterized in that**:
the pressure head (60) comprises a pressure head body (22) formed of a material transparent to an electric field (92) applied to a metallic nanocoil (80); and **in that** the apparatus (70) comprises:
a metallic nanocoil (80); and
an electric field application unit (90) configured for heating a pre-reaction composite material (2) by applying an electric field (92) to the composite material (2) in a direction of longitudinal extent of the composite material (2) and causing the metallic nanocoil (80) to generate heat,
wherein the pressure head (60) further comprises a high thermal conductive material layer (24) provided on a side of the pressure head body (22) facing the composite material (2), being transparent to the electric field (92) applied to the metallic nanocoil (80), and formed of a material having a thermal conductivity of 20 W/m·K or more which is higher than the thermal conductivity of the composite material (2).

10. A method for forming a composite material (2), the method comprising:
a heating step (S12) of placing a magnetic field coil (30) to be directed toward a pre-reaction composite material (2) and applying a magnetic field (32) from one side of the composite material (2) to heat the composite material (2); and
a pressing and thermally equalizing step (S14) of pressing the composite material (2) from another side of the composite material (2) using a pressure head (20) comprising a pressure head body (22) formed of a material transparent to the magnetic field (32) applied by the magnetic field coil (30), so as to press and thermally equalize the composite material (2),
**characterized in that** the pressure head (20) further comprises a high thermal conductive material layer (24) provided on a side of the pressure head body (22) facing the composite material (2), being transparent to the magnetic field (32) applied by the magnetic field coil (30), and formed of a material having a thermal conductivity of 20 W/m·K or more which is higher than the thermal conductivity of the composite material (2).

11. A method for forming a composite material (2), the method comprising:
a heating step (S12) of placing a metallic nanocoil (80) on a pre-reaction composite material (2), placing an electric field application unit (90) toward the composite material (2), applying an electric field (92) to the composite material (2) in a direction of longitudinal extent of the composite material (2), and causing the metallic nanocoil (80) to generate heat to heat the composite material (2); and
a pressing and thermally equalizing step (S14) of pressing the composite material (2) from another side of the composite material (2) using a pressure head (60) comprising a pressure head body (22) formed of a material transparent to the electric field (92) applied to the metallic nanocoil (80), so as to press and thermally equalize the composite material (2),
wherein the pressure head (60) further comprises a high thermal conductive material layer (24) provided on a side of the pressure head body (22) facing the composite material (2), being transparent to the electric field (92) applied by the electric field application unit (90), and formed of a material having a thermal conductivity of 20 W/m·K or more which is higher than the thermal conductivity of the composite material (2).

## Patentansprüche

1. Eine Vorrichtung zum Formen eines Verbundmaterials (10, 10', 50), wobei die Vorrichtung (10, 10', 50) umfasst:
einen Druckkopf, der über ein vorreagierendes Verbundmaterial einer Magnetfeldspule zugewandt ist, wobei die Magnetfeldspule auf einer Seite des Verbundmaterials vorgesehen ist und der Druckkopf auf einer anderen Seite des Verbundmaterials vorgesehen ist,
wobei der Druckkopf (20) einen Druckkopfkörper (22) umfasst, der aus einem Material gebildet ist, das für ein von einer Magnetfeldspule (30) angelegtes Magnetfeld (32) transparent ist, und
eine Magnetfeldspule (30), die konfiguriert ist, um ein Magnetfeld (32) an ein vorreagierendes Verbundmaterial (2) von einer Seite des Verbundmaterials (2) aus anzulegen, um das Verbundmaterial (2) zu erwärmen,
**dadurch gekennzeichnet, dass** der Druckkopf (20) ferner eine Schicht (24) aus hoch wärmeleitendem Material umfasst, die auf einer dem Verbundmaterial (2) zugewandten Seite des Druckkopfkörpers (22) vorgesehen ist, für das von der Magnetfeldspule (30) angelegte Magnetfeld (32) transparent ist und aus einem Material mit einer Wärmeleitfähigkeit von 20 W/m * K oder mehr gebildet ist, die höher ist als die Wärmeleitfähigkeit des Verbundmaterials (2).

2. Die Vorrichtung zum Formen eines Verbundmaterials (10, 10', 50) nach Anspruch 1, wobei das Material, das die wärmeleitende Materialschicht (24) bildet, Aluminiumnitrid, Siliziumnitrid, Saphir, Aluminiumoxid, Siliziumkarbid oder ein Plattenmaterial enthält, das ein unidirektionales Material enthält, in dem kein Wirbelstrom in Übereinstimmung mit dem von der Magnetfeldspule (30) angelegten Magnetfeld (32) auftritt.

3. Die Vorrichtung zum Formen eines Verbundmaterials (10, 10', 50) nach Anspruch 1 oder 2, ferner umfassend eine wärmeerzeugende Materialschicht (26), die zwischen dem Druckkopfkörper (22) und der wärmeleitenden Materialschicht (24) vorgesehen ist, die Wärme in Übereinstimmung mit dem von der Magnetfeldspule (30) angelegten Magnetfeld (32) erzeugt und aus einem Material gebildet ist, das eine geringere Wärmekapazität als das Verbundmaterial (2) aufweist.

4. Die Vorrichtung zum Formen eines Verbundmaterials (10, 10', 50) nach Anspruch 1 oder 2, ferner umfassend eine wärmeerzeugende Materialschicht (26), die auf einer dem Verbundmaterial (2) zugewandten Seite der wärmeleitenden Materialschicht (24) vorgesehen ist, Wärme in Übereinstimmung mit dem von der Magnetfeldspule (30) angelegten Magnetfeld (32) erzeugt und aus einem Material mit einer geringeren Wärmekapazität als der des Verbundmaterials (2) gebildet ist.

5. Die Vorrichtung zum Formen eines Verbundmaterials (10, 10', 50) nach Anspruch 3 oder 4, wobei die wärmeerzeugende Materialschicht (26) ein metallischer Dünnfilm ist.

6. Die Vorrichtung zum Formen eines Verbundmaterials (10, 10', 50) nach einem der Ansprüche 3 bis 5, die ferner eine wärmeisolierende Materialschicht (28) aufweist, die auf einer Seite vorgesehen ist, auf der sich der Druckkopfkörper (22) in Bezug auf die wärmeleitende Materialschicht (24) und die wärmeerzeugende Materialschicht (26) befindet, und die aus einem Material gebildet ist, dessen Wärmeleitfähigkeit geringer ist als die des Druckkopfkörpers (22).

7. Die Vorrichtung zum Formen eines Verbundmaterials (10, 10', 50) nach Anspruch 1 oder 2, ferner umfassend eine wärmeisolierende Materialschicht (28), die zwischen dem Druckkopfkörper (22) und der wärmeleitenden Materialschicht (24) vorgesehen ist und aus einem Material mit einer niedrigeren Wärmeleitfähigkeit als die des Druckkopfkörpers (2) gebildet ist.

8. Die Vorrichtung zum Formen eines Verbundmaterials (10, 10', 50) nach Anspruch 6 oder 7, wobei die wärmeisolierende Materialschicht (28) ein Harzmaterial ist.

9. Eine Vorrichtung zum Formen eines Verbundmaterials (70), wobei die Vorrichtung (70) einen Druckkopf (60) umfasst, der mit einer auf einem vorreagierenden Verbundmaterial angeordneten metallischen Nanospule versehen ist und **dadurch gekennzeichnet ist, dass**:
der Druckkopf (60) einen Druckkopfkörper (22) umfasst, der aus einem Material gemacht ist, das für ein elektrisches Feld (92), das an eine metallische Nanospule (80) angelegt wird, transparent ist
und dass die Vorrichtung (70) umfasst:
eine metallische Nanosäule (80), und
eine Einheit (90) zum Anlegen eines elektrischen Feldes, die konfiguriert ist, um ein vorreagierendes Verbundmaterial (2) zu erwärmen, indem sie ein elektrisches Feld (92) an das Verbundmaterial (2) in einer Richtung der Längserstreckung des Verbundmaterials (2) anlegt und bewirkt, dass die metallische Nanospule (80) Wärme erzeugt,
wobei der Druckkopf (60) ferner eine Schicht (24) aus hoch wärmeleitfähigem Material umfasst, die auf einer dem Verbundmaterial (2) zugewandten Seite des Druckkopfkörpers (22) vorgesehen ist, die für das an die metallische Nanospule (80) angelegte elektrische Feld (92) transparent ist und aus einem Material mit einer Wärmeleitfähigkeit von 20 W/m * K oder mehr gebildet ist, die höher ist als die Wärmeleitfähigkeit des Verbundmaterials (2).

10. Ein Verfahren zum Formen eines Verbundmaterials (2), wobei das Verfahren umfasst:
einen Erwärmungsschritt (S12) des Anordnens einer Magnetfeldspule (30), die auf ein vorreagierendes Verbundmaterial (2) gerichtet wird, und des Anlegens eines Magnetfeldes (32) von einer Seite des Verbundmaterials (2), um das Verbundmaterial (2) zu erwärmen, und
einen Press- und Wärmeausgleichsschritt (S14) des Pressens des Verbundmaterials (2) von einer anderen Seite des Verbundmaterials (2) unter Verwendung eines Druckkopfes (20), der einen Druckkopfkörper (22) umfasst, der aus einem Material gebildet ist, das für das von der Magnetfeldspule (30) angelegte Magnetfeld (32) transparent ist, um das Verbundmaterial (2) zu pressen und thermisch auszugleichen,
**dadurch gekennzeichnet, dass** der Druckkopf (20) ferner eine Schicht (24) aus hoch wärmeleitendem Material umfasst, die auf einer dem Verbundmaterial (2) zugewandten Seite des Druckkopfkörpers (22) vorgesehen ist, für das von der Magnetfeldspule (30) angelegte Magnetfeld (32) transparent ist und aus einem Material mit einer Wärmeleitfähigkeit von 20 W/m * K oder mehr gebildet ist, die höher ist als die Wärmeleitfähigkeit des Verbundmaterials (2).

11. Ein Verfahren zum Formen eines Verbundwerkstoffs (2), wobei das Verfahren umfasst:
einen Erwärmungsschritt (S12), bei dem eine metallische Nanofolie (80) auf einem vorreagierenden Verbundmaterial (2) angeordnet wird, eine Einheit (90) zum Anlegen eines elektrischen Feldes an das Verbundmaterial (2) angeordnet wird, ein elektrisches Feld (92) an das Verbundmaterial (2) in einer Richtung der Längserstreckung des Verbundmaterials (2) angelegt wird und die metallische Nanofolie (80) veranlasst wird, Wärme zu erzeugen, um das Verbundmaterial (2) zu erwärmen, und
einen Press- und Wärmeausgleichsschritt (S14) des Pressens des Verbundmaterials (2) von einer anderen Seite des Verbundmaterials (2) unter Verwendung eines Druckkopfes (60), der einen Druckkopfkörper (22) umfasst, der aus einem Material gebildet ist, das für das an die metallische Nanospule (80) angelegte elektrische Feld (92) transparent ist, um das Verbundmaterial (2) zu pressen und thermisch auszugleichen,
wobei der Druckkopf (60) ferner eine Schicht (24) aus hoch wärmeleitfähigem Material umfasst, die auf einer dem Verbundmaterial (2) zugewandten Seite des Druckkopfkörpers (22) vorgesehen ist, für das von der Einheit (90) zum Anlegen eines elektrischen Feldes angelegte elektrische Feld (92) transparent ist und aus einem Material mit einer Wärmeleitfähigkeit von 20 W/m * K oder mehr gebildet ist, die höher ist als die Wärmeleitfähigkeit des Verbundmaterials (2) .

## Revendications

1. Installation de formation d'un matériau (10, 10', 50) composite, installation (10, 10', 50) comprenant :
une tête de pression prévue en faisant face à une bobine de champ magnétique par l'intermédiaire d'un matériau composite de pré-réaction, la bobine de champ magnétique étant prévue d'un côté du matériau composite, la tête de pression étant prévue d'un autre côté du matériau composite,
la tête (20) de pression comprenant un corps (22) de tête de pression en un matériau transparent à un champ (32) magnétique appliqué par la bobine (30) de champ magnétique ; et
une bobine (30) de champ magnétique configurée pour appliquer un champ (32) magnétique à un matériau (2) composite de pré-réaction d'un côté du matériau (2) composite pour chauffer le matériau (2) composite,
**caractérisée en ce que** la tête (20) de pression comprend en outre une couche (24) de matériau très conducteur thermiquement prévue d'un côté du corps (22) de la tête de pression faisant face au matériau (2) composite, étant transparente au champ (32) magnétique appliqué par la bobine (30) de champ magnétique et formée d'un matériau ayant une conductibilité thermique de 20 W/m.K ou plus, qui est plus grande que la conductibilité thermique du matériau (2) composite.

2. Installation de formation d'un matériau (10, 10', 50) composite suivant la revendication 1, dans laquelle le matériau formant la couche (24) de matériau conducteur thermiquement contient l'un quelconque d'un nitrure d'aluminium, d'un nitrure de silicium, d'un saphir, d'une alumine, d'un carbure de silicium et un matériau en feuille contenant un matériau unidirectionnel, dans lequel du courant de Foucault ne se produit pas en fonction du champ (32) magnétique appliqué par la bobine (30) de champ magnétique.

3. Installation de formation d'un matériau (10, 10', 50) composite suivant la revendication 1 ou 2, comprenant en outre une couche (26) de matériau produisant de la chaleur prévue entre le corps (22) de la tête de pression et la couche (24) de matériau conducteur thermiquement produisant de la chaleur en fonction du champ (32) magnétique appliquée par la bobine (30) de champ magnétique et formée d'un matériau ayant une capacité calorifique plus petite que celle du matériau (2) composite.

4. Installation de formation d'un matériau (10, 10', 50) composite suivant la revendication 1 ou 2, comprenant en outre une couche (26) de matériau produisant de la chaleur prévue d'un côté de la couche (24) de matériau conducteur thermiquement faisant face au matériau (2) composite produisant de la chaleur en fonction du champ (32) magnétique appliquée par la bobine (30) de champ magnétique et formée d'un matériau ayant une capacité calorifique plus petite que celle du matériau (2) composite.

5. Installation de formation d'un matériau (10, 10', 50) composite suivant la revendication 3 ou 4, dans laquelle la couche (26) de matériau produisant de la chaleur est une mince pellicule métallique.

6. Installation de formation d'un matériau (10, 10', 50) composite suivant l'une quelconque des revendications 3 à 5, comprenant en outre une couche (28) de matériau isolant de la chaleur prévue d'un côté sur lequel le corps (22) de la tête de pression est présent par rapport au matériau (24) de matériau conducteur thermiquement et la couche (26) de matériau produisant de la chaleur est formée d'un matériau ayant une conductibilité thermique plus petite que celle du corps (22) de la tête de pression.

7. Installation de formation d'un matériau (10, 10', 50) composite suivant la revendication 1 ou 2, comprenant en outre une couche (28) de matériau isolant de la chaleur prévue entre le corps (22) de la tête de pression et la couche (24) de matériau conducteur thermiquement et formée d'un matériau ayant une conductibilité thermique plus petite que celle du corps (2) de la tête de pression.

8. Installation de formation d'un matériau (10, 10', 50) composite suivant la revendication 6 ou 7, dans laquelle la couche (28) de matériau isolant de la chaleur est un matériau de résine.

9. Installation de formation d'un matériau (70) composite, l'installation (70) comprenant une tête (60) de pression prévue en faisant face à une nanobobine métallique placée sur un matériau composite de pré-réaction et étant **caractérisée en ce que** :
la tête (60) de pression comprend un corps (22) de tête de pression en un matériau transparent à un champ (92) électrique appliqué à une nanobobine (80) métallique ; et **en ce que** l'installation (70) comprend :
une nanobobine (80) métallique ; et
une unité (90) d'application d'un champ électrique, configurée pour chauffer le matériau (2) composite de pré-réaction en appliquant un champ (92) électrique au matériau (2) composite dans une direction d'étendue longitudinale du matériau (2) composite et faisant que la nanobobine (80) métallique produit de la chaleur,
dans laquelle la tête (60) de pression comprend en outre une couche (24) de matériau très conducteur thermiquement prévue d'un côté du corps (22) de la tête de pression faisant face au matériau (2) composite, étant transparente au champ (92) appliqué à la nanobobine (80) métallique et formée d'un matériau ayant une conductibilité thermique de 20 W/m.K ou plus, qui est plus grande que la conductibilité thermique du matériau (2) composite.

10. Procédé de formation d'un matériau (2) composite, le procédé comprenant :
un stade (S12) de chauffage, dans lequel on place une bobine (30) de champ magnétique, pour qu'il soit dirigé vers un matériau (2) composite de pré-réaction et d'application d'un champ (32) magnétique d'un côté du matériau (2) composite pour chauffer le matériau (2) composite ; et
un stade (S14) de pression et d'égalisation thermique, dans lequel on presse le matériau (2) composite d'un autre côté du matériau (2) composite en utilisant une tête (20) de pression comprenant un corps (22) de tête de pression en un matériau transparent au champ (32) magnétique appliqué par la bobine (30) de champ magnétique, de manière à presser et à égaliser thermiquement le matériau (2) composite,
**caractérisé en ce que** la tête (20) de pression comprend en outre une couche (24) de matériau très conducteur thermiquement prévue d'un côté du corps (22) de la tête de pression faisant face au matériau (2) composite, étant transparente au champ (32) appliqué par la bobine (30) de champ magnétique et en un matériau ayant une conductibilité thermique de 20 W/m.K ou plus, qui est plus grande que la conductibilité thermique du matériau (2) composite.

11. Procédé de formation d'un matériau (2) composite, le procédé comprenant :
un stade (S12) de chauffage, dans lequel on place une nanobobine (80) métallique sur un matériau (2) composite de pré-réaction, on place une unité (90) d'application d'un champ électrique vers le matériau (2) composite, on applique un champ (92) électrique au matériau (2) composite dans une direction d'étendue longitudinale du matériau (2) composite, et on fait en sorte que la nanobobine (80) métallique produise de la chaleur pour chauffer le matériau (2) composite ; et
un stade (S14) de pression et d'égalisation thermique, dans lequel on presse le matériau (2) composite d'un autre côté du matériau (2) composite en utilisant une tête (60) de pression comprenant un corps (22) de tête de pression en un matériau transparent au champ (92) électrique appliqué à la nanobobine (80) métallique, de manière à presser et à égaliser thermiquement le matériau (2) composite,
dans lequel la tête (60) de pression comprend en outre une couche (24) de matériau très conducteur thermiquement prévue d'un côté du corps (22) de la tête de pression faisant face au matériau (2) composite, étant transparente au champ (92) magnétique appliqué par l'unité (90) d'application d'un champ électrique et formée d'un matériau ayant une conductibilité thermique de 20 W/m.K ou plus, qui est plus grande que la conductibilité thermique du matériau (2) composite.
